**Europäisches Patentamt**

(19) **European Patent Office**

**Office européen des brevets**

(11) Numéro de publication: **0 078 354**
**B1**

(12) **FASCICULE DE BREVET EUROPÉEN**

(45) Date de publication du fascicule du brevet:
**13.08.86**

(51) Int. Cl.⁴: **F 02 B 77/13,** B 60 R 13/08

(21) Numéro de dépôt: **81401766.1**

(22) Date de dépôt: **04.11.81**

(54) **Dispositif d'insonorisation pour moteurs à combustion interne, notamment pour engins de travaux publics ou agricoles, et engins équipés d'un tel dispositif.**

(43) Date de publication de la demande:
**11.05.83 Bulletin 83/19**

(45) Mention de la délivrance du brevet:
**13.08.86 Bulletin 86/33**

(84) Etats contractants désignés:
**AT BE CH DE FR GB IT LI SE**

(56) Documents cité:
**AT-A-334 697**
**DE-A-2 526 638**
**DE-A-2 554 750**
**FR-A-2 240 858**
**FR-A-2 248 723**
**FR-A-2 479 324**

(73) Titulaire: **JOHN DEERE (Société Anonyme), 8,
Quai de la Madeleine, F-45000 Orléans (FR)**

(72) Inventeur: **Couturier, Jean- Maurice, Résidence la
Mouillère 3, Allée des Chênes, F-45100 Orleans
(FR)**

(74) Mandataire: **Pruvost, Marc Henri, Cabinet ORES 6,
Avenue de Messine, F-75008 Paris (FR)**

## Description

La présente invention concerne l'insonorisation des machines génératrices de bruit telles que les moteurs a combustion interne logés dans un capotage entourant en principé complètement le moteur et dont le refroidissement est assuré par un ventilateur associé à un radiateur. Elle est applicable notamment aux engins de travaux publics ou agricoles du type dans lequl un moteur, généralement un moteur Diesel, monté sur l'engin, est logé dans un capotage l'entourant en principe complètement et présentant des orifices ou ouvertures d'entrée et de sortie de l'air de refroidissement. Elle s'applique d'une façon plus particulière aux ensembles moteurs ou engins équipés d'un ventilateur soufflant, refoulant l'air de refroidissement du moteur vers l'extérieur du capotage à travers un radiateur parcouru de la manière classique par le liquide de refroidissement.

Compte tenu de son application la plus courante, l'invention sera décrite ci-après dans son utilisation sur les engins de travaux publics ou agricoles tels que les chargeuses les tracteurs, etc..., mais on comprendra qu'elle est applicable également à des machines ou ensembles moteurs fixes du type général précité, dans lesquels un groupe moteur logé dans un capotage est refroidi par un ensemble radiateurventilateur, plus spécialement par un ensemble radiateurventilateur soufflant.

C'est un fait en soi bien connu que les engins tels que les engins de travaux publics sont à l'origine de niveaux sonores très élevés, et les règlementations en vigueur dans la plupart des pays limitent le niveau sonore admissible pour de tels engins, qui souvent doivent travailler non loin delocaux d'habitation. On a en conséquence déjà proposé de nombreuses solutions pour réduire ce niveau sonore par l'interposition, entre la source de bruit et l'extérieur, d'écrans d'absorption du bruit, munis de lumières de passage de l'air de refroidissement du groupe moteur.

On a ainsi proposé dans la technique antérieure, (FR-A-2 248 723) de monter, dans le trajet de sortie de l'air refoulé par un ventilateur soufflant à travers un radiateur équipant un moteur d'engin de travaux publics, un ensemble d'insonorisation présentant des passages non rectilignes délimités par des lames garnies de mousse assurant l'absorption du bruit, le profil non rectiligne de ces lames évitant une sortie directe de l'air et ainsi une radiation également directe des ondes sonores. Mais une telle solution, si elle présente certains avantages, est d'une réalisation relativement complexe et coûteuse et elle est encombrante, ce qui peut exiger un allongement du châssis de l'engin pour supporter l'ensemble d'insonorisation.

On a proposé par ailleurs, dans le DE-A-25 54 750 de monter dans le trajet de sortie de l'air refoulé par un ventilateur soufflant à travers un radiateur des amortisseurs de bruit à relaxation, protégés par une plaque perforée. Mais ici encore, l'encombrement du système d'insonorisation est relativement important et l'ensemble est d'une réalisation assez complexe.

Il a également été proposé, pour l'insonorisation d'engins de travaux publics ou agricoles (Fr-A-2 479 324), d'interposer dans le trajet de sortie de l'air refoulé par le ventilateur soufflant un bloc de matière cellulaire ou mousse muni de canaux parallèles de passage de l'air présentant des dimensions comprises dans certaines limites. L'encombrement d'un tel dispositif d'amortissement acoustique est alors nettement plus réduit et sa réalisation est simple.

Enfin, il est connu par le At-A-334 687 et leFR-A-2 240 858 de disposer dans le trajet d'écoulement de l'air des lames parallèles entre elles, canalisant le flux d'air et le subdivisant, ces lames étant conjuguées à un matériau d'absorption du bruit, afin d'agir sur les courants d'air partiels ainsi créés pour réduire le niveau sonore.

Un but de l'invention est d'apporter des perfectionnements aux dispositifs d'insonorisation ou d'amortissement acoustique de ce type général, en permettant la réalisation d'un dispositif peu encombrant, fournissant un amortissement acoustique très poussé.

Un autre but de l'invention est de créer un dispositif d'insonorisation adaptable sur un engin de travaux publics ou agricole, tel qu'une chargeuse ou un tracteur par exemple, sans modification du châssis ou des cotes extérieures de l'engin, du fait de l'encombrement réduit du dispositif.

Un autre but encore est de créer un dispositif d'insonorisation qui, sous une forme de réalisation, soit de construction extrêmement simple et en conséquence d'un prix de revient limité, tout en fournissant un amortissement acoustique efficace.

L'invention concerne en conséquence un dispositif d'insonorisation pour machines ou moteurs à combustion interne montés dans un capotage entourant de façon sensiblement complète la machine ou le moteur et équipés d'un ventilateur soufflant refoulant l'air de refroidissement vers l'extérieur à travers un radiateur, ce dispositif étant constitué par un élément d'amortissement en un matériau d'absorption acoustique présentant des ouvertures dirigées dans ia airecion de refoulement de l'air par le ventilateur soufflant et écarté du radiateur pour ménager entre eux une chambre d'expansion de l'air refoulé par le ventilateur soufflant à travers ledit radiateur, caractérisé en ce que les ouvertures dirigées dans la direction de refoulement de l'air par le ventilateur sont limitées à une ou plusieurs ouvertures centrales permettant une sortie d'air directe, et en ce qu'il est prévu, en combinaison avec ces ouvertures centrales, des ouvertures périphériques inclinées par rapport à cette direction de refoulement de l'air de façon telle que l'air traversant ces ouvertures périphériques soit dirigé obliquement vers le flux d'air central sortant par l'ouverture ou les ouvertures centrales de l'élément.

On sait que le débit d'air d'un ventilateur n'est pas uniforme dans toute la section droite de refoulement de l'air par ce ventilateur. Il existe, au centre du ventilateur, une zone dans laquelle ce débit est nettement plus faible, ledit débit croissant vers l'extérieur pour prendre une valeur maximum dans une zone périphérique. Or le niveau sonore atteint pour une machine ou un engin du type concerné est fonction du débit de l'air refoulé.

Les recherches ayant abouti à l'invention ont montré que l'on peut réduire efficacement le niveau sonore en dirigeant directement vers l'extérieur l'air refoulé par le ventilateur dans la partie centrale de celui-ci et en déviant l'air de la zone périphérique en direction de ce flux d'air central. Il se produit alors en effet, sous l'action de l'air périphérique s'écoulant en un flux à vitesse élevée par suite de son débit, une accélération par aspiration du flux central, due à l'effet de jet, ce qui tend ainsi à créer en amont de l'élément d'amortissement acoustique, dans la chambre d'expansion précitée, un effet d'aspiration sur l'air périphérique dont une fraction va ainsi se diriger vers le centre de l'élément et va être évacuée par son ouverture ou ses ouvertures centrales, avec en conséquence une redistribution de l'air dans la section droite de passage de l'élément d'amortissement acoustique.

De préférence, l'ouverture ou les ouvertures centrales de l'élément d'amortissement acoustique ont une section droite représentant une fraction notable de la section droite totale du passage de l'air à travers l'élément d'amortissement acoustique.

L'élément comporte de façon avantageuse plusieurs ouvertures centrales séparées par des déflecteurs parallèles, l'écartement entre ces déflecteurs étant calculé en vue de l'absorption des fréquences les plus gênantes, afin de réaliser ainsi par ce moyen en soi connu un abaissement supplémentaire du niveau sonore.

Le résultat désiré peut être obtenu en prévoyant dans l'élément d'amortissement acoustique des ouvertures périphériques rectilignes inclinées par rapport à la direction du flux d'air refoulé par le ventilateur ou des ouvertures profilées. Mais dans tous les cas la section et/ou le profil des ouvertures de cet élément d'amortissement acoustique sont étudiés de manière à éviter la turbulence du flux d'air qui serait bien entendu à l'origine d'un accroissement de niveau sonore.

Suivant un mode de réalisation paraissant avantageux, l'élément d'amortissement acoustique est constitué par un bloc de matière cellulaire ou de mousse présentant des ouvertures désirables. On peut utiliser à cet effet, par exemple, un bloc de mousse de polyuréthane à cellules ouvertes recouvert d'un film étanche qui peut également être en polyuréthane. Un élément de ce type fournit une très bonne absorption des bruits et en conséquence un très bon amortissement. Les ouvertures requises peuvent alors être ménagées dans ce bloc directement lors de sa fabrication par moulage, d'une manière en soi classique dans la technique de fabrication d'objets moulés en matière plastique cellulaire ou expansée. Les dimensions de ces ouvertures et l'inclinaison des ouvertures périphériques dépendent bien entendu de paramètres tels que la taille du ventilateur soufflant, celle du radiateur, la dimension relative de ces éléments par rapport au capotage moteur et analogues, et ces dimensions et inclinaisons peuvent être déterminées aisément par voie empirique pour obtenir le degré d'amortissement optimum du bruit.

Un bloc d'amortissement de ce type est capable de fournir un très bon amortissement acoustique pour une épaisseur relativement faible, de l'ordre de 100 à 200 mm par exemple, de sorte qu'il peut être adapté derrière le radiateur d'un engin de travaux publics ou d'un tracteur sans modification du châssis et sans augmentation d'encombrement. Il est recouvert de façon classique, sur sa face extérieure, par une grille ou analogue perturbant au minimum l'écoulement de l'air.

De façon préférentielle, le bloc d'amortissement en mousse a des dimensions extérieures telles qu'il soit encastré dans le capotage du groupe moteur avec une légère déformation, ce qui fournit une bonne étanchéité au bruit sur tout le pourtour de ce bloc d'amortissement, entre celui-ci et ce capotage, sans qu'il soit nécessaire de faire appel à des moyens supplémentaires. Par ailleurs, si un ou plusieurs raidisseurs, par exemple en métal ou autre matière rigide, sont prévus dans ce bloc d'amortissement, ils sont recouverts de mousse et n'apparaissent pas à l'extérieur, afin d'éviter toute réflexion des ondes sonores.

De façon avantageuse, les moyens maintenant l'élément d'amortissement acoustique écarté du radiateur peuvent être constitués par un ou plusieurs talons venus de moulage avec ce bloc d'amortissement et venant buter contre le radiateur en position d'assemblage, pour ménager la chambre d'expansion requise.

Le maintien en place du bloc d'amortissement acoustique peut être assuré de toute manière désirée, mais une solution simple consiste à prévoir vers l'extrémité arrière du capotage des pattes ou analogues derrière lesquelles le bloc est encastré par déformation élastique.

De façon avantageuse, dans le cas d'un engin tel qu'un engin de travaux publics ou un tracteur comportant une pompe hydraulique ou un dispositif analogue monté à la partie inférieure arrière, le bloc d'amortissement est prolongé vers le bas pour recouvrir cette pompe hydraulique et assurer ainsi également son insonorisation.

Suivant une variante de réalisation l'invention concerne un dispositif d'insonorisation pour machines ou moteurs à combustion interne montés dans un capotage entourant de façon sensiblement complète la machine ou le moteur et équipés d'un ventilateur soufflant refoulant l'air de refroidissement vers l'extérieur à travers un radiateur, ce dispositif étant constitué par un élément d'amortissement comprenant un matériau d'absorption acoustique, écarté du radiateur pour ménager entre eux une chambre d'expansion de l'air refoulé par le ventilateur soufflant à travers ce radiateur et comportant des lames formant déflecteurs, ménageant entre elles des passages destinés à l'air, caractérisé en ce que ces passages sont parallèles à la direction de refoulement de l'air dans la partie centrale de l'élément d'amortissement, correspondant au flux d'air central refoulé par le ventilateur, et sont inclinés par rapport à cette direction de refoulement de l'air dans une partie périphérique de l'élément d'amortissement, de façon telle que l'air traversant ces passages périphériques soit dirigé obliquement vers le flux d'air central traversant les passages centraux de l'élément d'amortissement.

Ces lames ont de façon avantageuse un profil aérodynamique, par exemple en "goutte d'eau", pour perturber au minimum le flux d'air et éviter les turbulences. Elles sont constituées avantageusement par un support central tel qu'un tube, entouré par une matière cellulaire ou mousse afin d'éviter toute réflexion des ondes sonores.

De façon préférentielle, les lames sont, au moins dans les parties latérales du cadre, disposées en quinconce sur le trajet de passage de l'air, et leur section et leur répartition sont telles qu'elles s'opposent à un écoulement rectiligne des filets d'air au droit desdites lames, afin de supprimer toute "vue directe" du bruit dans cette zone.

Les lames sont, comme indiqué, fixées par leurs extrémités dans un cadre de montage qui est judicieusement lui-même garni de matière cellulaire évitant les réflexions d'ondes sonores. Les moyens maintenant l'élément d'amortissement écarté du radiateur peuvent être prévue directement sur le cadre de support des lames.

L'invention concerne également les machines fixes ou mobiles et notamment les engins de travaux publics ou agricoles équipés d'un dispositif d'insonorisation tel que spécifié ci-avant.

La description qui va suivre faite en regard des dessins annexés, donnés à titre non limitatif, permettra de mieux comprendre l'invention.

La Fig. 1 est une vue en perspective schématique de de la partie arrière d'un engin de travaux publics montrant le dispositif d'insonorisation prévu suivant un mode de réalisation de l'invention.

La Fig. 2 est une vue en coupe horizontale schématique correspondant à la Fig. 1.

La Fig. 3 est une vue de face du bloc d'amortissement acoustique prévu sur les Fig. 1 et 2.

La Fig. 4 est une vue de profil correspondante.

La Fig. 5 est une vue en coupe horizontale d'une variante de réalisation comprenant un cadre et des lames formant déflecteurs.

La Fig. 6 est une vue en coupe transversale à plus grande échelle de l'une des lames utilisées suivant le mode de réalisation que montre la Fig. 5.

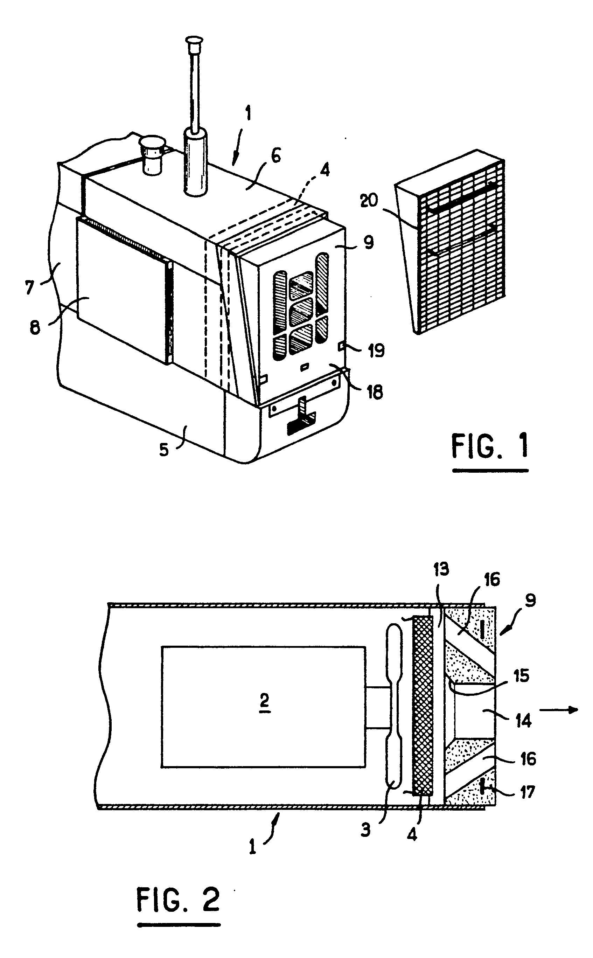

On a représenté de façon schématique sur les Fig. 1 et 2 la partie arrière d'un engin de travaux publics et plus spécialement la partie comportant le groupe moteur, qui comprend un capotage désigné d'une façon générale par la référence 1 à l'intérieur duquel est logé un moteur de type Diesel 2 (Fig. 2) combiné à un ventilateur soufflant 3. Un radiateur 4 est monté de la manière habituelle derrière ce ventilateur soufflant 3.

Le capotage 1 entoure complètement le groupe moteur, qui est supporté par le châssis 5 de l'engin. Le capotage présente une partie supérieure 6 et des parties latérales dans lesquelles sont prévus des panneaux 8 d'aspiration de l'air, qui peuvent présenter toute structure appropriée, mais de préférence une structure évitant les bruits d'aspiration, par exemple des panneaux munis de lumières et garnis intérieurement d'un revêtement de matière cellulaire.

Il est prévu derrière le radiateur 4, d'une manière en soi connue, un dispositif d'insonorisation qui évite, en arrière de l'engin, un niveau sonore inacceptable.

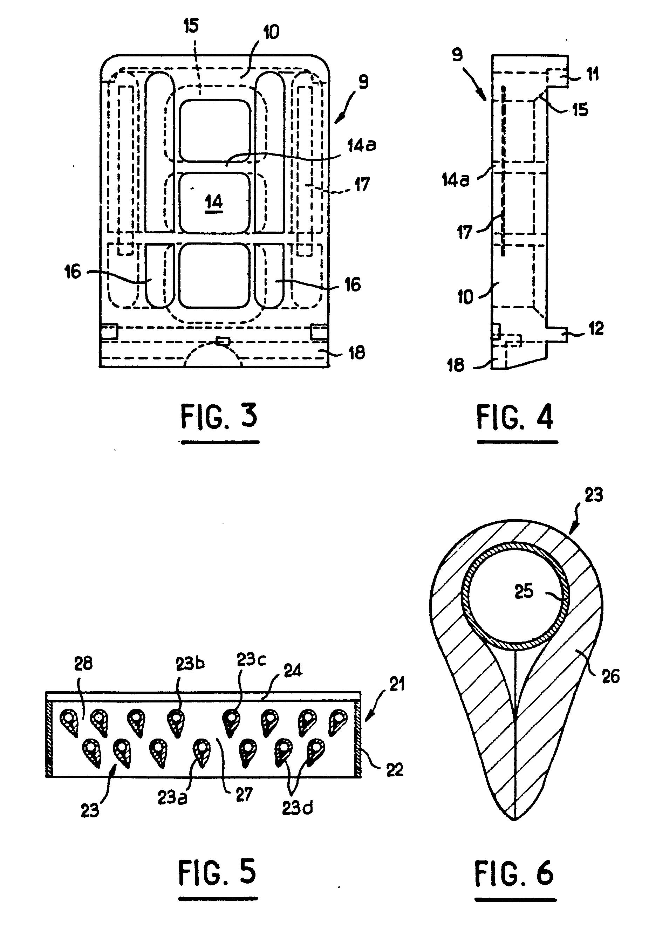

Suivant le mode de réalisation de l'invention considéré, ce dispositif d'insonorisation comprend un bloc d'amortissement acoustique en matière cellulaire désigné dans son ensemble par la référence 9. La structure de ce bloc de matière cellulaire est mieux visible sur les Fig. 3 et 4.

Il est constitué par une mousse à cellules ouvertes telle qu'une mousse de polyuréthane, recouverte sur sa partie extérieure par un film étanche qui peut également être en polyuréthane. Ce bloc d'amortissement acoustique comprend un corps 10 muni à sa partie supérieure 11 et vers sa partie inférieure 12 de talons s'étendant sur toute sa largeur, destinés à prendre appui en condition assemblée contre les parties supérieure et inférieure du radiateur 4, afin de ménager entre celui-ci et le bloc d'amortissement acoustique une chambre d'expansion qui est indiquée en 13 sur la Fig. 2.

Comme visible sur le dessin, le bloc d'amortissement acoustique comprend dans le cas présent trois ouvertures centrales 14 qui sont superposées verticalement et dont l'axe est orienté dans la direction de refoulement de l'air par le ventilateur soufflant 3, c'est-à-dire dans la direction longitudinale de l'engin équipé du dispositif d'insonorisation suivant l'invention. On voit en particulier sur les dessins que ces ouvertures 14 présentent une section importante et que leurs bords 15 dirigés vers l'avant sont biseautés afin de permettre à l'air de pénétrer dans lesdites ouvertures sans écoulement turbulent, ce qui évite la production de bruit additionnel.

Ces ouvertures sont séparées par des cloisons 14a formant des déflecteurs parallèles dont l'espacement est calculé de façon à assurer l'absorption des fréquences les plus gênantes et à fournir ainsi par ce moyen en soi connu un abaissement supplémentaire du niveau sonore.

Il est prévu en outre, de part et d'autre des ouvertures centrales superposées 14, des ouvertures latérales 16 qui s'étendent sensiblement sur toute la hauteur du corps 10 du bloc d'amortissement acoustique. Suivant le mode de réalisation considéré, chaque ouverture latérale 16 est interrompue en afin de conférer au bloc 9 une meilleure tenue. Ces ouvertures latérales pourraient également être subdivisées en un certain nombre d'ouvertures élémentaires.

Comme cela apparaît sur les Fig. 2 et 3, les ouvertures latérales 16 sont inclinées en direction du centre du bloc d'amortissement acoustique 9 depuis la périphérie de ce bloc. Le rôle de cette inclinaison sera indiqué plus loin.

On a montré également en 17 sur les Fig. 2, 3 et 4 des raidisseurs qui sont prévus dans le bloc d'amortissement acoustique pour éviter sa déformation. Ces raidisseurs 17, qui peuvent être en métal ou en un autre matériau rigide, sont noyés dans le bloc soit lors du moulage, soit de préférence en incisant le bloc de mousse après sa fabrication, en introduisant les raidisseurs en place et en recollant les deux parties de la mousse à l'extérieur des raidisseurs, pour éviter toute présence de matière rigide pouvant réfléchir les ondes sonores à l'extérieur du bloc d'amortissement acoustique.

Comme visible également sur les dessins, le bloc 9 est prolongé vers le bas en 18 au-dessous du talon 12, de manière à recouvrir en vue de son insonorisation la pompe hydraulique de l'engin.

Le bloc d'amortissement acoustique 9 a des dimensions extérieures telles qu'il vienne s'encastrer avec une légère déformation dans le capotage 1 du moteur à sa partie arrière, en assurant ainsi, sans faire appel à d'autres moyens, une étanchéité satisfaisante tout autour de ce capotage, évitant le passage des ondes sonores génératrices de bruit additionnel.

Le maintien en place du bloc d'amortissement acoustique est judicieusement assuré au moyen de pattes 19 (Fig. 1) prévues sur le bord arrière du capotage du moteur et dirigées vers l'intérieur, le bloc en matière cellulaire 9 pouvant être encastré facilement derrière ces pattes de retenue 19 par simple déformation élastique. La protection du bloc 9 est assurée par une grille 20 qui peut être de tout type désiré et qui est fixée de façon classique sur l'extrémité arrière du capotage 1 du groupe moteur de l'engin.

Le bloc d'amortissement acoustique agit de la façon suivante: On sait que, dans la partie centrale d'un ventilateur soufflant tel que le ventilateur 3, le débit de l'air traversant le radiateur 4 est faible. Par contre, ce débit augmente en direction de la périphérie du ventilateur soufflant, jusqu'à un débit maximum dans une zone périphérique de celui-ci.

Du fait de l'agencement prévu suivant l'invention, l'air qui est refoulé par le ventilateur soufflant 3 dans sa partie périphérique traverse les ouvertures latérales 16 du bloc d'amortissement acoustique 9 et est dirigé par ces ouvertures latérales vers le centre de ce bloc et de l'engin. A la sortie des ouvertures latérales inclinées 16, les flux d'air exercent sur l'air qui s'échappe par les ouvertures centrales 14 un effet de jet assurant une aspiration et une accélération. Cet effet d'aspiration est transmis jusqu'à la partie avant du bloc d'amortissement acoustique 9, dans la chambre d'expansion 13, et il s'exerce sur les flux d'air qui se trouvent à la périphérie de cette chambre d'expansion et qui tendent à pénétrer dans les ouvertures latérales 16. Il en résulte en conséquence l'aspiration d'une fraction de cet air latéral vers les ouvertures centrales 14 et une redistribution de l'air tendant vers un équilibrage dans toute la section de sortie du bloc d'amortissement acoustique, ce qui comme l'ont montré les recherches effectuées permet une nette diminution du niveau sonore en arrière de l'engin.

Des essais ont montré que le niveau sonore peut ainsi être ramené jusqu'à une valeur acceptable en fonction des réglementations en vigueur au moyen d'un bloc de matière cellulaire 9 ayant une épaisseur de l'ordre de 150 mm et avec une inclinaison des ouvertures latérales 16 par rapport à l'axe du ventilateur soufflant 3 allant de 25 à 40°, ce qui fournit l'effet de jet et d'aspiration mentionné ci-avant.

On se reportera maintenant aux Fig. 5 et 6, qui montrent une variante de réalisation de l'invention.

Dans ce cas, le dispositif d'insonorisation, désigné dans son ensemble par la référence 21, comprend un cadre 22 qui est en matière rigide garnie de préférence de matière cellulaire, à l'intérieur duquel sont montées des lames verticales 23. Ce cadre 22 présente vers sa partie supérieure et vers sa partie inférieure des talons 24 dirigés vers l'avant dans la position de montage et destinés à prendre appui contre le radiateur pour maintenir ledit cadre écarté de ce radiateur et pour ménager ainsi une chambre d'expansion analogue à la chambre d'expansion 13 visible sur la Fig. 2.

On a représenté sur la Fig. 6 un mode de réalisation de lame 23 pouvant être utilisée dans le cas présent. Cette lame comprend ici un tube 25 en matière rigide, par exemple en métal, qui est entouré de mousse indiquée en 26, le corps de mousse ayant en section droite une forme aérodynamique en goutte d'eau, pour favoriser l'écoulement et éviter les turbulences.

On a représenté sur la Fig. 5 la répartition des lames dans le cadre 22, qui correspond à une caractéristique importante de l'invention. Dans ce cas, on voit qu'il est prévu vers la partie centrale des lames 23a, 23b, 23c disposées de façon telle que leur plan de symétrie, indiqué en Y sur la Fig. 6, soit orienté dans la direction de refoulement de l'air par le ventilateur soufflant. Ces lames 23a, 23b, 23c ménagent en outre des passages d'air 27 qui sont également orientés dans la direction de refoulement de l'air par le ventilateur soufflant, pour permettre un écoulement d'air dans la direction longitudinale de l'engin.

De part et d'autre de ces lames 23a, 23b, 23c, il est prévu d'autres lames indiquées d'une façon générale en 23d, qui sont orientées obliquement par rapport à l'axe longitudinal du dispositif 21 de telle sorte que leurs pointes arrière soient orientées vers le centre de ce dispositif. Il en résulte une orientation oblique des filets d'air par rapport à cette direction longitudinale dans les parties latérales du dispositif 21, comme indiqué pour les passages 28, ces filets d'air rencontrant le flux d'air central en exerçant sur lui un effet d'aspiration et de jet comme dans le mode de réalisation précédent.

De façon préférentielle, la répartition des lames et leur section droite sont étudiées de façon à éviter tout écoulement rectiligne des filets d'air dans les parties latérales du dispositif 21, ce qui supprime également toute vue directe du bruit pour une personne se tenant en arrière de l'engin équipé de ce dispositif d'insonorisation.

## Revendications

1.- Dispositif d'insonorisation pour machines ou moteurs à combustion interne montés dans un capotage (1) entourant de façon sensiblement complète la machine ou le moteur (2) et équipés d'un ventilateur soufflant (3) refoulant l'air de refroidissement vers l'extérieur à travers un radiateur (4), ce dispositif étant constitué par un élément d'amortissement (9) en un matériau d'absorption acoustique présentant des ouvertures dirigées dans la direction de refoulement de l'air par le ventilateur soufflant (3) et écarté du radiateur (4) pour ménager entre eux une chambre (13) d'expansion de l'air refoulé par le ventilateur soufflant à travers ledit radiateur, caractérisé en ce que les ouvertures dirigées dans la direction de refoulement de l'air par le ventilateur sont limitées à une ou plusieurs ouvertures centrales (14) permettant une sortie d'air directe, et en ce qu'il est prévu, en combinaison avec ces ouvertures centrales (14), des ouvertures périphériques (16) inclinées par rapport à cette direction de refoulement de l'air de façon telle que l'air traversant ces ouvertures périphériques (16) soit dirigé obliquement vers le flux d'air central sortant par l'ouverture ou les ouvertures centrales (14) de l'élément (9).

2.- Dispositif d'insonorisation suivant la revendication 1, caractérisé en ce que l'ouverture ou les ouvertures centrales (14) de l'élément d'amortissement acoustique (9) ont une section droite représentant une fraction notable de la section droite totale de passage de l'air à travers l'élément d'amortissement acoustique (9).

3.- Dispositif d'insonorisation suivant la revendication 1 ou 2, caractérisé en ce qu'il est prévu plusieurs ouvertures centrales (14) séparées l'une de l'autre par des déflecteurs parallèles (14a) dont l'écartement est calculé de façon connue en vue de l'absorption des fréquences les plus gênantes pour fournir un abaissement supplémentaire du niveau sonore.

4.- Dispositif d'insonorisation suivant la revendication 1, 2 ou 3, caractérisé en ce que l'élément d'amortissement acoustique est constitué par un bloc (9) de matière cellulaire ou de mousse.

5.- Dispositif d'insonorisation suivant la revendication 4, caractérisé en ce que ce bloc a une épaisseur comprise entre 100 et 200 mm.

6.- Dispositif d'insonorisation suivant la revendication 4 ou 5, caractérisé en ce que ce bloc de matière cellulaire (9) a des dimensions extérieures telles qu'il s'engage avec une légère déformation dans le capotage (1) entourant la machine ou le moteur, afin d'assurer une étanchéité au bruit par rapport à ce capotage.

7.- Dispositif d'insonorisation suivant la revendication 4, 5 ou 6, caractérisé en ce que ce bloc (9) renferme un ou plusieurs raidisseurs (17) en matière rigide, notamment en métal, qui sont enveloppés complétement par la matière cellulaire.

8.- Dispositif d'insonorisation suivant la revendication 6, caractérisé en ce qu'il est prévu, sur ou dans le capotage (1) de la machine ou du moteur, des pattes de retenue (19), et en ce que les dimensions du bloc d'amortissement acoustique (9) sont telles que ce bloc puisse être engagé par déformation derrière ces pattes pour sa fixation.

9.- Dispositif d'insonorisation suivant l'une quelconque des revendications 4 à 8, caractérisé en ce que les moyens maintenant l'élément d'amortissement acoustique (9) écarté du radiateur (4) sont constitués par un ou plusieurs talons (11, 12) venus de moulage avec le bloc d'amortissement.

10.- Dispositif d'insonorisation suivant l'une quelconque des revendications 4 à 9, applicable à un engin comportant une pompe hydraulique ou un dispositif analogue à sa partie inférieure arrière, caractérisé en ce que le bloc d'amortissement acoustique (9) est prolongé vers le bas (en 18) pour recouvrir cette pompe hydraulique et assurer son insonorisation.

11.- Dispositif d'insonorisation pour machines ou moteurs à combustion interne montés dans un capotage (1) entourant de façon sensiblement compléte la machine ou le moteur (2) et équipés d'un ventilateur soufflant (3) refoulant l'air de refroidissement vers l'extérieur à travers un radiateur (4), ce dispositif étant constitué par un élément d'amortissement (21) comprenant un matériau d'absorption acoustique, écarté du radiateur pour ménager entre eux une chambre (13) d'expansion de l'air refoulé par le ventilateur soufflant à travers ce radiateur et comportant des lames (23) formant déflecteurs, ménageant entre elles des passages (27, 28) destinés à l'air, caractérisé en ce que ces passages sont parallèles (27) à la direction de refoulement de l'air dans la partie centrale de l'élément d'amortissement (21), correspondant au flux d'air central refoulé par le ventilateur (3), et sont inclinés (28) par rapport à cette direction de refoulement de l'air dans une partie périphérique de l'élément d'amortissement (21), de façon telle que l'air traversant ces passages périphériques (28) soit dirigé obliquement vers le flux d'air central traversant les passages centraux de l'élément d'amortissement.

12.- Dispositif d'insonorisation suivant la revendication 11, caractérisé en ce que les lames ont un profil aérodynamique, notamment en "goutte d'eau".

13.- Dispositif d'insonorisation suivant la revendication 11 ou 12, caractérisé en ce que les lames (23) sont constituées par un support rigide (25) tel qu'un tube entouré de matière cellulaire (26).

14.- Dispositif d'insonorisation suivant la revendication 11, 12 ou 13, caractérisé en ce que les lames (23) sont, au moins dans les parties latérales du cadre, disposées en quinconce sur le trajet de passage de l'air, leur section et leur répartition étant telles qu'elles s'opposent à tout écoulement rectiligne des filets d'air franchissant lesdites lames.

15.- Dispositif d'insonorisation suivant l'une quelconque des revendications 11 à 14, caractérisé en ce que les lames (23) sont fixées par leurs extrémités dans un cadre (22) garni de matière cellulaire, muni de moyens (24) le maintenant écarté du radiateur (4) pour ménager une chambre d'expansion de l'air.

16.- Machines fixes ou mobiles, notamment engins de travaux publics ou agricoles, équipés d'un dispositif d'insonorisation suivant l'une quelconque des revendications 1 à 15.


**Patentansprüche**

1. Schalldämpfungsvorrichtung für Maschinen oder Motoren mit innerer Verbrennung, die in einer Verkleidung (I) montiert sind, welche im wesentlichen vollständig die Maschine oder den Motor (2) umschließt und mit einem Gebläse (3) ausgerüstet ist, das die Kühlluft durch einen Radiator nach außen fördert, wobei die Vorrichtung durch ein Dämpfungselement (9) aus einem akustisch absorbierenden Material besteht, das Öffnungen darbietet, die in Richtung der Förderung der Luft durch das Gebläse (3) ausgerichtet sind, und das im Abstand von dem Radiator (4) angeordnet ist, um dazwischen eine Ausdehnungskammer (13) für die vom Gebläse durch den Radiator geförderte Luft zu bilden, dadurch gekennzeichnet, daß die in Richtung der Förderung der Luft durch das Gebläse ausgerichteten Öffnungen auf eine oder mehrere zentrale Öffnungen (14) begrenzt sind, die einen direkten Austritt der Luft gestatten, und daß in Kombination mit diesen zentralen Öffnungen (14) periphere Öffnungen (16) vorgesehen sind, die zur Förderrichtung der Luft derart geneigt sind, daß die diese peripheren Öffnungen (16) passierende Luft zum zentralen Luftstrom, der aus der oder den zentralen Öffnungen (14) des Dämpfungselementes (9) austritt, hingeneigt gerichtet ist.

2. Schalldämpfungsvorrichtung nach Anspruch 1, dadurch gekennzeichnet, daß die zentrale Öffnung oder die zentralen Öffnungen (14) des akustischen Dämpfungselementes (9) einen Querschnitt aufweist, der einen merklichen Bruchteil des Gesamtquerschnittes des Durchganges der Luft quer durch das akustische Dämpfungselement (9) repräsentiert.

3. Schalldämpfungsvorrichtung nach Anspruch 1 oder 2, dadurch gekennzeichnet, daß mehrere zentrale Öffnungen (14) vorgesehen sind, die voneinander durch parallele Ablenkelemente (14a) getrennt sind, deren Abstand in an sich bekannter Weise im Hinblick auf die Absorption der am meisten störenden Frequenzen berechnet ist, um eine ergänzende Absenkung des Schallniveaus zu liefern.

4. Schalldämpfungsvorrichtung nach Anspruch I, 2 oder 3, dadurch gekennzeichnet, daß das akustische Dämpfungselement aus einem Block (9) aus zellenförmigem oder schwammförmigem Material besteht.

5. Schalldämpfungsvorrichtung nach Anspruch 4, dacurch gekennzeichnet, daß der Block eine Dicke zwischen 100 und 200 mm aufweist.

6. Schalldämpfungsvorrichtung nach Anspruch 4 oder 5, dadurch gekennzeichnet, daß der Block (9) aus zellenförmigem Material Äußere Abmessungen aufweist, derart, daß er unter leichter Verformung in die Verkleidung (1) eingreift, welche die Maschine oder den Motor umschließt, um eine Geräuschabdichtung gegenüber der Verkleidung sicherzustellen.

7. Schalldämpfungsvorrichtung nach Anspruch 4, 5 oder 6, dadurch gekennzeichnet, daß der Block (9) ein oder mehrere Verstärkungselemente (17) aus starrem Material, insb. Metall, aufweist, welche vollständig durch das zellenförmige Material eingeschlossen sind.

8. Schalldämpfungsvorrichtung nach Anspruch 6, dadurch gekennzeichnet, daß auf oder in der Verkleidung (I) der Maschine oder des Motors Halteklauen (19) vorgesehen sind und daß die Abmessungen des akustischen Dämpfungsblockes (9) derart sind, daß der Block für seine Befestigung durch Verformung hinter die Klauen in Eingriff gebracht werden kann.

9. Schalldämpfungsvorrichtung nach irgendeinem der Ansprüche 4 bis 8, dadurch gekennzeichnet, daß die Mittel, welche das akustische Dämpfungselement (9) im Abstand zum Radiator (4) halten, durch einen oder mehrere Absätze (11, 12) gebildet sind, die mit dem Dämpfungsblock ausgeformt sind.

10. Schalldämpfungsvorrichtung nach irgendeinem der Ansprüche 4 bis 9, die bei einer Maschine anwendbar ist, welche eine hydraulische Pumpe oder eine analoge Vorrichtung in ihrem unteren rückwärtigen Bereich aufweist, dadurch gekennzeichnet, daß der akustische Dämpfungsblock (9) nach unten (bei 18) verlängert ist, um diese hydraulische Pumpe abzudecken und ihre Schalldämpfung sicherzustellen.

11. Schalldämpfungsvorrichtung für Maschinen oder Motoren mit innerer Verbrennung, die in einer Verkleidung (1) montiert sind, welche im wesentlichen vollständig die Maschine oder den Motor (2) einschließt und mit einem Gebläse (3) ausgerüstet ist, welches die Kühlluft durch einen Radiator (4) nach außen fördert, wobei die Vorrichtung durch ein Dämpfungselement (21) gebildet ist, das ein akustisches Absorptionsmaterial umfaßt, im Abstand vom Radiator angeordnet ist, um zwischen ihnen eine Expansionskammer (13) für die von dem Gebläse durch den Radiator geförderte Luft zu bilden, und Ablenkelemente bildende Flügel (23) aufweist, welche zwischen sich Durchgänge (27, 28) für die Luft bilden, dadurch gekennzeichnet, daß im zentralen Bereich des Dämpfungselementes (21) die Durchgänge (27) zu der Förderrichtung der Luft, welche dem durch das Gebläse (3) geförderten zentralen Luftstrom entspricht, parallel sind und in einem peripheren Bereich des Dämpfungselementes (21) die Durchgänge (28) gegenüber der Förderrichtung der Luft geneigt sind, derart, daß die die periheren Durchgänge (28) passierende Luft zu dem zentralen Luftstrom, der die zentralen Durchgänge des Dämpfungselementes passiert, geneigt gerichtet ist.

12. Schalldämpfungsvorrichtung nach Anspruch 11, dadurch gekennzeichnet, daß die Flügel ein aerodynamisches Profil, insb. ein wassertropfenförmiges Profil, aufweisen.

13. Schalldämpfungsvorrichtung nach Anspruch 11 oder 12, dadurch gekennzeichnet, daß die Flügel (23) durch ein starres Stützglied (25), wie ein Rohr, gebildet sind, das von zellenförmigem Material (26) umgeben ist.

14. Schalldämpfungsvorrichtung nach den Ansprüchen 11, 12 oder 13, dadurch gekennzeichnet, daß die Flügel (23), wenigstens in den seitlichen Eereichen des Rahmens, versetzt auf der Bahn des Luftdurchganges angeordnet sind, wobei ihr Profil und ihre Aufteilung derart sind, daß sie jeder geraden Strömung der Luftfäden, welche die Flügel passieren, entgegenwirken.

15. Schalldämpfungsvorrichtung nach irgendeinem der Ansprüche 11 bis 14, dadurch gekennzeichnet, daß die Flügel (23) mit ihren Enden in einem Rahmen (22) befestigt sind, der mit zellenförmigem Material ausgerüstet und mit Mitteln (24) versehen ist, um ihn im Abstand von dem Radiator (4) zu halten und eine Expansionskammer für die Luft zu bilden.

16. Ortsfeste oder bewegliche Maschinen, insb. Maschinen für Öffentliche oder landwirtschaftliche Arbeiten, die ausgerüstet sind mit einer Schalldämpfungsvorrichtung gemäß irgendeinem der Ansprüche 1 bis 15.

**Claims**

1. A noise-reducing device for machines or internal combustion engines which are mounted in a cowling (1) surrounding virtually completely the machine or engine (2) and are fitted with a blower fan (31 forcing the cooling air outwards through a radiator (4), this device conprising a damping menber (9) of sound-absorbing material which has openings facing in the direction in which the air is blown by the blower fan (3) and is separated from the radiator (4) to form between the radiator and itself an expansion chamber (13) for the air forced through said radiator by the blower fan, characterized in that the openings facing in the direction in which the air is blown by the fan are limited to one or more central openings (14) allowing direct exit of air, and in that there are provided, in conjunction with these central openings (14), peripheral openings (16) inclined in relation to the direction of airflow in such a way that the air passing through these peripheral openings (16) is directed obliquely towards the central airflow exiting via the central opening or openings (14) in the damping member (9).

2. A noise-reducing device according to claim 1, characterized in that the central opening or openings (14) in the sound-damping member (9) have a cross-section representing a considerable portion of the total cross-section of air passage through the sound-damping member (9).

3. A noise-reducing device according to claim 1 or claim 2, characterized in that there are provided several central openings (14) separated from each other by parallel deflectors (14a), the distance between each of which is calculated in a known way with a view to absorbing the most annoying frequencies and thus reducing the noise level still further.

4. A noise-reducing device according to claim 1, claim 2 or claim 3, characterized in that the sound-damping member consists of a block (9) of cellular or foam material.

5. A noise-reducing device according to claim 4, characterized in that this block has a thickness of between 100 and 200 mm.

6. A noise-reducing device according to claim 4 or claim 5, characterized in that this block of cellular material (9) has external dimensions such that it fits. with slight deformation, into the cowling (1) surrounding the machine or engine. so as to ensure sound-proofness with respect to this cowling.

7. A noise-reducing device according to claim 4, claim 5 or claim 6, characterized in that this block (9) contains one or more stiffeners (17) of rigid material, particularly metal, which are completely encased in the cellular material.

8. A noise-reducing device according to claim 6, characterized in that holding brackets (19) are provided on or in the cowling (1) of the machine or engine, and in that the dimensions of the sound-damping block (9) are such that this block may be fitted behind the brackets by deformation, so as to fix it in place.

9. A noise-reducing device according to any one of claims 4 to 8, characterized in that the means holding the sound-damping member (9) away from the radiator (4) consist of one or more lugs (11, 12) moulded in one piece with the damping block.

10. A noise-reducing device according to any one of claims 4 to 9 and suitable for a machine having a hydraulic pump or similar device at its lower rear part, characterized in that the sound-damping block (9) extends downwards (at 18) to cover this hydraulic pump and ensure that its noise is reduced.

11. A noise-reducing device for machines or internal combustion engines which are mounted in a cowling (1) surrounding virtually completely the machine or engine (2) and are fitted with a blower fan (3) forcing the cooling air outwards through a radiator (4), this device comprising a damping member (21) of sound-absorbing material, separated from the radiator to form between the radiator and itself an expansion chamber (13) for the air forced by the blower fan through the radiator and comprising slats (23) which form deflectors and define between them passages (27, 28) for the air, characterized in that these passages are parallel (27) to the direction of airflow in the central part of the damping member (21), corresponding to the central airflow caused by the fan (3), and are inclined (28) in relation to this direction of airflow in a peripheral part of the damping member (21), in such a way that the air passing through these peripheral passages (28) is directed obliquely towards the central airflow passing through the central passages in the damping member.

12. A noise-reducing device according to claim 11, characterized in that the slats have an aerodynamic cross-section, especially that of a "tear drop".

13. A noise-reducing device according to claim 11 or claim 12. characterized in that the slats (23) consist of a rigid support (25) such as a tube surrounded by cellular material (26).

14. A noise-reducing device according to claim 11, claim 12 or claim 13, characterized in that at least in the lateral parts of the frame the slats (23) are in staggered arrangement along the flowpath of the air, their section and their distribution being such that they prevent any rectilinear flow of the thin streams of air passing through said slats.

15. A noise-reducing device according to any one of claims 11 to 14, characterized in that the slats (23) are fixed by their ends in a frame (22) lined with cellular material and provided with means (24) for holding it away from the radiator (4) in order to form an air expansion chamber.

16. Stationary or mobile machines, especially agricultural or publ ic works equipment, fitted with a noise-reducing device according to any one of claims 1 to 15.

FIG. 1

FIG. 2

1

FIG. 3

FIG. 4

FIG. 5

FIG. 6